# FASCICULE DE BREVET EUROPEEN

(11) **EP 1 228 927 B1**
(45) Date de publication et mention de la délivrance du brevet: **24.11.2004**
(21) Numéro de dépôt: 02290275.3
(22) Date de dépôt: 05.02.2002
(51) Int. Cl.: B60R 19/04, B60R 19/24

(54) **Ensemble de deux pièces de carrosserie en matière plastique à réunir bord à bord**
Anordnung von zwei aneinander zu verbindende Kunststofffahrwerkteilen
Assembly of two plastic vehicle body parts, to be connected against each other

(30) Priorité: 05.02.2001 FR 0101521
(43) Date de publication de la demande: 07.08.2002
(73) Titulaire: COMPAGNIE PLASTIC OMNIUM, 69007 Lyon (FR)
(72) Inventeur: Cordebar, Francis, 01100 Veyziat (FR)
(74) Mandataire: Remy, Vincent Noel Paul

(56) Documents cités:
- EP-A- 0 779 183
- FR-A- 2 460 811
- FR-A- 2 789 964
- GB-A- 2 344 085
- US-A- 4 039 215

## Description

La présente invention concerne un ensemble de deux pièces de carrosserie en matière plastique à réunir bord à bord selon le préambule de la revendication 1, comme connu par GB-A-2 344 085.

On sait que les pièces de carrosserie nécessitent de plus en plus d'être parfaitement mises en référence les unes par rapport aux autres afin d'assurer l'esthétique du véhicule.

Dans cette optique, on a déjà imaginé un certain nombre de solutions consistant à fixer précisément chaque pièce de carrosserie sur la structure du véhicule, en veillant à ce que des pièces de carrosserie adjacentes bénéficient de points de fixation voisins, voire identiques, sur leurs bords contigus.

Les fixations mises en jeu dans ces solutions doivent être relativement solides car elles assurent le soutien des pièces de carrosserie en même temps que leur mise en référence.

Ces fixations sont généralement constituées par des pièces rapportées, souvent en métal, et il en résulte des problèmes de coût, tant en fourniture qu'en main d'oeuvre.

De plus, l'ajout de métal ou de toute matière différente de celle constituant les pièces de carrosserie complique leur recyclage.

La présente invention vise à fournir un nouvel ensemble de deux pièces de carrosserie dont l'assemblage ne nécessite aucune pièce de fixation externe et qui procure un positionnement relatif des deux pièces d'une grande précision.

La présente invention a pour objet un ensemble de deux pièces de carrosserie en matière plastique selon la revendication 1.

Selon l'invention, la liaison reliant la clavette à la pièce de carrosserie qui la supporte est conformée en une bande apte à se recourber sur elle-même, pour permettre à la clavette de pénétrer dans l'orifice traversant de la languette.

On comprend que l'invention procure un moyen simple de solidariser les bords en regard des deux pièces, d'une manière à la fois robuste, simple, rapide et sans recourir à aucune pièce rapportée.

Il en résulte notamment que le recyclage des pièces est facilité car les parties assurant la liaison entre elles est constituée de la même matière que le reste des pièces de carrosserie.

De plus, du fait que les pièces de carrosserie selon l'invention sont réalisées en matière plastique, l'obtention de la languette percée sur l'une d'elles, de la lumière et de la clavette sur l'autre, résulte d'un simple aménagement du moule de fabrication desdites pièces, et ce quelque soit le procédé de moulage retenu.

Toutefois, il est avantageux, selon l'invention, de conformer la clavette et sa liaison déformable de manière à ne pas compliquer l'opération de démoulage de la pièce moulée. En d'autres termes, il conviendra de préserver la pièce comportant la clavette de la nécessité d'utiliser une contre-dépouille du seul fait de la présence de ladite clavette.

De préférence, la clavette comporte une tête d'introduction de forme conique ou prismatique qui assure son guidage lors de son engagement dans l'orifice traversant, ainsi qu'un corps de moindre épaisseur situé en aval de sa tête (dans le sens de l'introduction dans l'orifice traversant). Du fait du changement d'épaisseur avec le corps, la tête d'introduction forme un épaulement de retenue qui maintient la clavette dans l'orifice d'introduction après passage légèrement en force de ladite tête d'introduction.

En outre, grâce à ce corps de moindre épaisseur, une fois la clavette en place, les contraintes imposées à la languette lors du passage de la tête d'introduction se relâchent, ce qui préserve les pièces de carrosserie de déformations locales indésirables pouvant, à la longue, résulter de ces contraintes.

Dans un mode de réalisation particulier, dans lequel chaque bord de pièce comporte une face latérale de contact avec l'autre bord, l'une au moins des pièces est munie de cales formant, avec sa face latérale de contact, un coin de réception du bord de l'autre pièce.

Ces cales assurent le positionnement suivant deux directions perpendiculaires à l'arête du coin, par exemple en X (longitudinalement) et en Y (transversalement) par rapport au véhicule si l'arête du coin est sensiblement verticale.

Lorsque les deux pièces comportent de telles cales, celles-ci sont de préférence agencées en quinconce pour ne pas se gêner et décalées vers l'intérieur du véhicule afin de passer derrière la face de contact de l'autre pièce.

Dans une variante préférée, les cales en quinconce sont dimensionnées sur les deux pièces de carrosserie de manière que deux cales adjacentes appartenant chacune à une pièce se trouvent au voisinage l'une de l'autre lorsque les deux pièces sont assemblées. De cette manière, les cales assurent également le positionnement relatif des deux pièces suivant une troisième direction, parallèle à l'arête du coin et, par conséquent, perpendiculaire aux deux directions précédemment mentionnées.

Les cales sont de préférence de forme prismatique, la petite base se trouvant à l'extrémité de la cale, afin de faciliter le rapprochement des deux pièces de carrosserie en servant de guides de positionnement selon ladite troisième direction.

Dans un mode de réalisation particulier, la clavette est munie d'un talon qui facilite son insertion dans l'orifice traversant de la languette en offrant une surface d'appui, par exemple pour le pouce d'un opérateur ou pour une pince. Ce talon s'étend de préférence parallèlement à la languette lorsque la clavette est insérée dans l'orifice traversant. Ainsi, on peut prendre appui sur la languette et sur le talon pour les rapprocher, en les serrant l'un contre l'autre, ou pour les séparer, par exemple en insérant entre eux un tournevis jouant le rôle de coin.

Dans un mode de réalisation particulier de l'invention, les deux pièces de carrosserie sont d'une part, un pare-chocs, d'autre part, une aile ou un enjoliveur d'aile.

Des exemples de réalisation de l'invention vont maintenant être décrits afin d'en faciliter la compréhension, à l'aide des figures annexées qui décrivent :
- figure 1 : vue en perspective d'une partie avant gauche d'un pare-chocs et d'un enjoliveur d'aile avant gauche assemblés,
- figure 2 : section horizontale des deux pièces de la figure 1,
- figure 3 : vue rapprochée en perspective des bords en regard de la peau du pare-chocs et de l'enjoliveur d'aile avant assemblage,
- figure 4 : vue rapprochée de la partie IV de la figure 2,
- figure 5 : section analogue à celle de la figure 4 prise dans un plan parallèle décalé.
- figure 6 : vue analogue à la figure 3 montrant une variante,
- Figure 7 : vue analogue à la figure 4 montrant la variante de la figure 6.

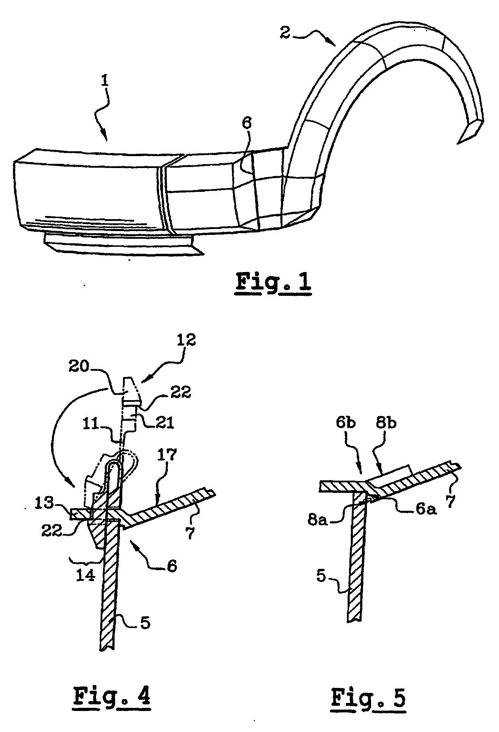

A la figure 1, on a représenté un pare-chocs 1 et un enjoliveur d'aile 2, que l'on prévoit de raccorder avec précision par leurs bords voisins 6, 8. Ces bords se rejoignent relativement bas par rapport au véhicule, en un endroit où l'on ne dispose pas de pièce de structure pour assurer la fixation.

En effet, l'enjoliveur d'aile 2 couvre toute la bordure de l'aile en suivant la moitié supérieure de la roue et se raccorde au pare-chocs 1 devant la roue.

Le pare-chocs 1 comporte une structure interne 3 d'absorption de chocs, qui peut être de nature quelconque, et une peau externe 4.

La peau externe 4 se termine, à chacune de ses extrémités latérales, par un retour 5 dirigé selon la direction longitudinale du véhicule, ayant un bord 6 s'étendant en direction de l'aile.

L'enjoliveur d'aile 2 se prolonge vers l'avant par un retour 7 dirigé sensiblement dans la direction transversale du véhicule, terminé par un bord 8 en direction du pare-chocs.

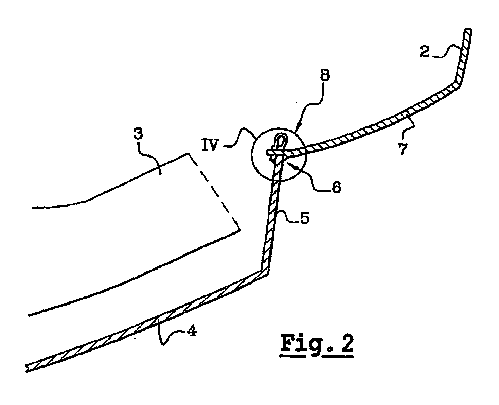

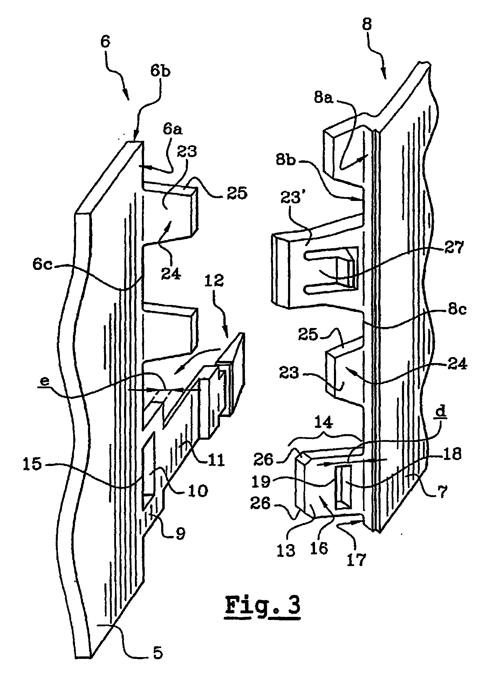

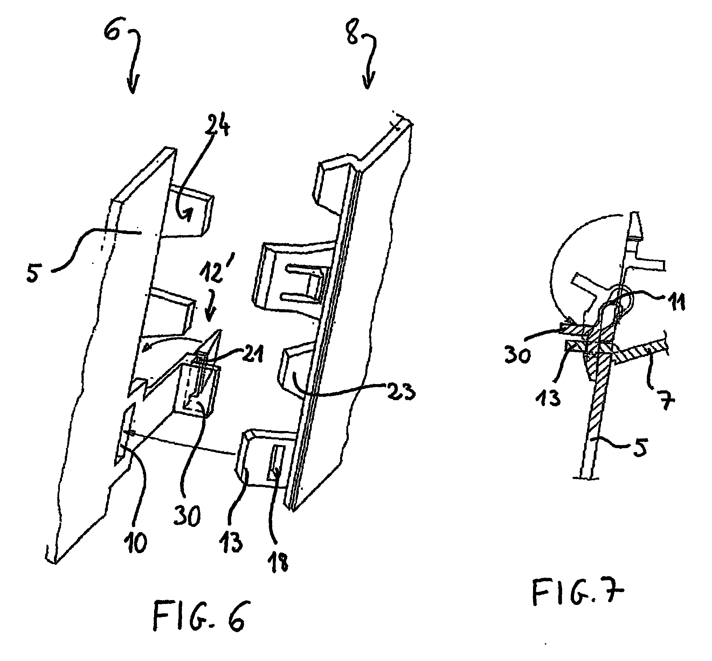

Les bords 6, 8 ainsi définis de la peau de pare-chocs et de l'enjoliveur d'aile, désignés ci-après peau 4 et enjoliveur 2, se raccordent dans la région IV (figure 2), dont des vues rapprochées sont fournies par les section et coupe des figures 4 et 5, mais dont la structure est mieux visible sur la perspective de la figure 3.

Le bord 6 de la peau 4 comporte une excroissance 9 prolongeant ladite peau, dans laquelle est formée une lumière 10 de section rectangulaire. Ladite excroissance 9 se prolonge par une bande 11 de matière plastique formée d'un seul tenant avec la peau et présentant une faible épaisseur de manière à être déformable, notamment par enroulement sur elle-même.

La bande de matière plastique aboutit à une clavette 12 dont la forme sera détaillée ultérieurement.

Le bord 8 de l'enjoliveur 2 comporte, en regard de la lumière 10 de section rectangulaire, une languette 13 s'étendant en direction de la peau et dont la section est légèrement inférieure à celle de la lumière.

Cette languette est suffisamment longue pour, lorsqu'elle est introduite dans la lumière, comporter une portion d'extrémité 14 dépassant de l'autre côté de la peau, au delà de ladite lumière.

La lumière 10 est positionnée dans l'excroissance 9 de manière à ce que sa limite avant 15 (c'est-à-dire opposée à la clavette 12) se trouve alignée avec l'arête 6c du bord 6 de la peau. Sur l'enjoliveur, la languette 13 est, de même, positionnée de manière que sa face avant 16, qui est destinée à s'appuyer sur la limite avant 15 de la lumière, se trouve dans le prolongement de la face arrière cachée 17 de l'enjoliveur.

Ainsi, si l'on considère la face latérale de contact 6a, 8a de chaque bord et sa face arrière cachée 6b, 8b, ces deux faces forment, sur chaque pièce, un coin dont l'arête 6c, 8c est destinée à coïncider avec l'arête de l'autre pièce.

La languette 13 comporte un orifice traversant 18 de section rectangulaire, au moins partiellement situé dans sa portion d'extrémité 14, c'est-à-dire dont la limite avant 19 est positionnée à une distance d de l'arête 6c au moins égale à l'épaisseur e de l'excroissance 9 comportant la lumière 10.

De cette manière, lorsque la languette 13 est introduite dans la lumière 10, le bord 8 de l'enjoliveur venant au contact du bord 6 de la peau, l'orifice traversant 18 ménagé dans la languette se trouve de l'autre côté de l'excroissance, au ras de la face de cette dernière opposée à la bordure d'aile, comme on le voit à la figure 4.

La clavette 12 située à l'extrémité de la bande mince 11 peut alors, par déformation de cette bande, être amenée en regard de l'orifice traversant 18 de la languette pour y être introduite.

La clavette 12 comprend une tête prismatique 20 dont la petite base se situe à son extrémité libre et dont la grande base a une épaisseur légèrement supérieure à l'épaisseur de la section libre de l'orifice traversant 13 dépassant de l'excroissance 10. En d'autres termes, si l'orifice traversant est partiellement masqué par l'excroissance, en étant compris dans son épaisseur, la section libre considérée correspond à la section de l'orifice traversant réduite de sa portion se trouvant dans l'épaisseur de l'excroissance.

En amont de sa tête prismatique, la clavette 12 comporte un corps 21 de moindre épaisseur, de sorte que la grande base de la tête prismatique forme un épaulement 22 qui assure la rétention de la clavette dans l'orifice traversant.

On comprend que lors de l'insertion de la clavette, la languette subit une traction pour le passage de la grande base de la tête prismatique et que cette traction disparaît lorsque le corps de la clavette remplace, dans l'orifice traversant, la tête prismatique qui dépasse de l'autre côté de la languette.

L'ensemble ainsi constitué forme un verrou qui garantit le maintien au contact de la peau et de l'enjoliveur.

Par ailleurs, les bords en regard des deux pièces étant rectilignes, ils comportent des aménagements destinés à améliorer leur positionnement relatif.

Tout d'abord, chaque bord comporte des cales 23 en forme de dents qui s'étendent en direction de l'autre bord à partir de la face cachée 6b, 8b de chaque pièce.

Chaque dent 23 comporte une face visible 24 qui définit, avec la face latérale 6a, 8a de contact du bord correspondant, un coin servant d'appui au bord de l'autre pièce pour assurer son positionnement suivant deux directions perpendiculaires entre elles et perpendiculaires aux deux bords, c'est-à-dire longitudinalement (en X) et transversalement (en Y) sur le dessin.

De plus, sur l'une et l'autre des deux pièces, les dents 23 sont disposées en quinconce de manière à s'intercaler au moment du rapprochement des deux pièces. La largeur des dents et l'espace laissé libre entre elles sur une pièce correspond respectivement à l'espace laissé libre entre deux dents et à leur largeur sur l'autre pièce. Ainsi, lorsque les bords des deux pièces sont au contact, les cales en forme de dents assurent, en plus du positionnement suivant les deux directions précédemment mentionnées, un positionnement particulièrement précis dans la direction des bords, c'est-à-dire en hauteur (en Z) sur le dessin.

Les dents 23 sont conformés en prismes de manière que les deux pièces puissent être présentées l'une en face de l'autre avec un positionnement grossier, les côtés 25 des cales assurant, par glissement les uns sur les autres, le guidage des deux pièces jusqu'à un positionnement précis dans lequel la languette peut pénétrer dans la lumière.

On peut noter par ailleurs que des chanfreins 26 sont prévus sur la languette pour faciliter son engagement dans la lumière.

Enfin, certaines des dents (une seule 23' sur la figure 3) comportent un clip de retenue sous la forme d'une patte 27 élastiquement déformable découpée dans son épaisseur, qui vient s'encliqueter sur le bord de l'autre pièce pour prépositionner les deux pièces en vue de la fermeture du verrou.

Dans la variante des figures 6 et 7, on a reporté les mêmes références sur les parties du dessin identiques à celles déjà décrites. La clavette 12' est munie d'un talon 30 qui s'étend perpendiculairement à celle-ci à partir de sa base 12'a, juste avant son corps 21 de moindre épaisseur.

Comme on le voit sur la figure 7, ce talon 30 se trouve parallèle à la languette 13 lors de l'engagement de la clavette dans l'orifice traversant de la languette.

Il offre ainsi une surface d'appui facilitant l'engagement de la clavette. Par exemple, on peut pincer le talon 30 et la languette 13 entre les deux mâchoires d'une pince (non représentée). De même, on peut aisément séparer le talon 30 de la clavette 13 en insérant par exemple un tournevis entre eux et en les écartant, ce qui provoque le retrait de la clavette hors de l'orifice de la languette.

Il est bien entendu que les modes de réalisation décrits ci-dessus ne présentent aucun caractère limitatif et pourraient recevoir toute modification désirable sans sortir pour cela du cadre de l'invention.

En particulier, il n'est pas nécessaire, selon l'invention, que la lumière et l'orifice traversant soient fermés. Des formes ouvertes assurant la retenue de la languette et/ou de la clavette dans les positions définies ci-dessus, bien que vraisemblablement moins efficaces, peuvent être considérées, au sens de la présente invention, comme constituant une lumière et un orifice traversant.

## Revendications

1. Ensemble de deux pièces de carrosserie en matière plastique comportant chacune un bord (6,8) destiné à venir en contact avec le bord de l'autre pièce, le bord (6) d'une des pièces comportant une lumière (10) tandis que le bord (8) de l'autre pièce comportant une languette (13) s'étendant vers l'autre pièce et apte à pénétrer dans ladite lumière en faisant dépasser une portion d'extrémité (14) de ladite languette au delà de la lumière, ladite languette étant percée d'un orifice traversant (13) situé dans sa portion d'extrémité (14), l'autre pièce étant pourvue d'une clavette (12) attachée à ladite autre pièce par une liaison déformable (11), qui permet à ladite clavette de venir s'engager dans l'orifice traversant (13) de la languette une fois cette languette introduite dans la lumière, pour retenir la languette dans la lumière, la liaison reliant la clavette à la pièce de carrosserie qui la supporte prennant naissance au voisinage de la lumière (10) **caractérisé en ce que** ladite liaison est conformée en une bande (11) apte à se recourber sur elle-même, pour permettre à la clavette de pénétrer dans l'orifice traversant de la languette.

2. Ensemble selon la revendication 1, **caractérisé en ce que** la clavette (12) comporte une tête d'introduction (20) de forme conique ou prismatique qui assure son guidage lors de son engagement dans l'orifice traversant, ainsi qu'un corps (21) de moindre épaisseur situé en aval de sa tête (dans le sens de l'introduction dans l'orifice traversant).

3. Ensemble selon l'une quelconque des revendications 1 à 2, dans lequel chaque bord (6,8) de pièce comporte une face latérale (6a,8a) de contact avec l'autre bord, **caractérisé en ce que** l'une au moins des pièces est munie de cales (23) formant, avec sa face latérale de contact, un coin de réception du bord de l'autre pièce.

4. Ensemble selon la revendication 3, **caractérisé en ce que** les cales (23) sont agencées en quinconce pour ne pas se gêner et sont décalées vers l'intérieur du véhicule afin de passer derrière la face de contact (6a,8a) de l'autre pièce.

5. Ensemble selon la revendication 4, **caractérisé en ce que** les cales (23) en quinconce sont dimensionnées sur les deux pièces de carrosserie de manière que deux cales adjacentes appartenant chacune à une pièce se trouvent au voisinage l'une de l'autre lorsque les deux pièces sont assemblées.

6. Ensemble selon l'une quelconque des revendications 3 à 5, **caractérisé en ce que** les cales (23) sont de forme prismatique, la petite base se trouvant à l'extrémité de la cale, afin de faciliter le rapprochement des deux pièces de carrosserie en servant de guides de positionnement selon ladite troisième direction.

7. Ensemble selon l'une quelconque des revendications 1 à 6, **caractérisé en ce que** la clavette (12') est munie d'un talon (30) qui facilite son insertion dans l'orifice traversant de la languette (13) en offrant une surface d'appui, ce talon étant de préférence parallèle à la languette lorsque la clavette est insérée dans l'orifice traversant.

8. Ensemble selon l'une quelconque des revendications 1 à 7, **caractérisé en ce que** les deux pièces de carrosserie sont d'une part, un pare-chocs (1), d'autre part, une aile ou un enjoliveur d'aile (2).

## Patentansprüche

1. Einheit von zwei Karosserieteilen aus Kunststoff, jeweils umfassend einen Rand (6, 8), der dazu bestimmt ist, mit dem Rand des anderen Teils in Kontakt zu kommen, wobei der Rand (6) eines der Teile eine Öffnung (10) aufweist, während der Rand (8) des anderen Teils eine Zunge (13) aufweist, die sich zum anderen Teil erstreckt und in die Öffnung eindringen kann, wobei ein Endabschnitt (14) der Zunge über die Öffnung hinausragt, wobei die Zunge eine Durchbohrung (13) aufweist, die sich in ihrem Endabschnitt (14) befindet, wobei der andere Teil mit einem Keil (12) versehen ist, der am anderen Teil durch eine verformbare Verbindung (11) befestigt ist, die es dem Keil ermöglicht, in die Durchbohrung (13) der Zunge einzugreifen, wenn diese Zunge in die Öffnung eingeführt ist, um die Zunge in der Öffnung zu halten, wobei die Verbindung, die den Keil mit dem diesen tragenden Karosserieteil verbindet, in der Nähe der Öffnung (10) beginnt, **dadurch gekennzeichnet, dass** die Verbindung in Form eines Bandes (11) ausgebildet ist, das sich um sich selbst biegen kann, um es dem Keil zu ermöglichen, in die Durchbohrung der Zunge einzudringen.

2. Einheit nach Anspruch 1, **dadurch gekennzeichnet, dass** der Keil (12) einen Einführungskopf (20) konischer oder prismenartiger Form umfasst, der seine Führung bei seinem Eingreifen in die Durchbohrung sicher stellt, sowie einen Körper (21) von geringerer Dicke, der sich stromabwärts zu seinem Kopf (in Einführungsrichtung in die Durchbohrung) befindet.

3. Einheit nach einem der Ansprüche 1 bis 2, bei der jeder Rand (6, 8) eines Teils eine seitliche Kontaktfläche (6a, 8a) mit dem anderen Rand umfasst, **dadurch gekennzeichnet, dass** mindestens einer der Teile mit Klötzen (23) versehen ist, die mit seiner seitlichen Kontaktfläche einen Aufnahmewinkel für den Rand des anderen Teils bilden.

4. Einheit nach Anspruch 3, **dadurch gekennzeichnet, dass** die Klötze (23) in Zickzack angeordnet sind, um sich nicht zu stören, und zum Inneren des Fahrzeugs versetzt sind, um hinter der Kontaktfläche (6a, 8a) des anderen Teils zu verlaufen.

5. Einheit nach Anspruch 4, **dadurch gekennzeichnet, dass** die Klötze (23) in Zickzack auf den beiden Karosserieteilen derart dimensioniert sind, dass zwei aneinander grenzende Klötze, die jeweils einem Teil angehören, in der Nähe voneinander angeordnet sind, wenn die beiden Teile zusammengebaut werden.

6. Einheit nach einem der Ansprüche 3 bis 5, **dadurch gekennzeichnet, dass** die Klötze (23) Prismenform haben, wobei sich die kleine Basis am Ende des Klotzes befindet, um die Annäherung der beiden Karosserieteile zu erleichtern, wobei sie als Führung für die Positionierung in die dritte Richtung dient.

7. Einheit nach einem der Ansprüche 1 bis 6, **dadurch gekennzeichnet, dass** der Keil (12') mit einer Ferse (30) versehen ist, die sein Einsetzen in die Durchbohrung der Zunge (13) erleichtert, wobei sie eine Stützfläche bietet, wobei diese Ferse vorzugsweise parallel zur Zunge ist, wenn der Keil in die Durchbohrung eingesetzt ist.

8. Einheit nach einem der Ansprüche 1 bis 7, **dadurch gekennzeichnet, dass** die beiden Karosserieteile einerseits ein Stoßdämpfer (1) und andererseits eine Leiste oder eine Zierleiste (2) sind.

## Claims

1. An assembly of two pieces of bodywork of plastics material, each piece having an edge (6, 8) for coming into contact with an edge of the other piece, the edge (6) of one of the pieces having a slot (10) while the edge (8) of the other piece having a tongue (13) extending from the other piece and suitable for penetrating into said slot, so as to cause an end portion (14) of said tongue to project beyond the slot, said tongue being pierced by a through orifice (13) situated in its end portion (14), the other piece being provided with a cotter (12) attached to said other piece by means of a deformable link (11) which enables said cotter to be engaged in the through orifice (13) of the tongue once the tongue has been inserted in the slot, thereby retaining the tongue in the slot, the connection connecting the cotter to the piece of bodywork which carries it beginning in the vicinity of the slot (10), **characterized in that** said connection is shaped to form a strap (11) suitable for being folded over so as to enable the cotter to penetrate into the through orifice in the tongue.

2. An assembly according to claim 1, **characterized in that** the cotter (12) comprises an insertion head (20) of conical or prismatic shape enabling it to be guided during engagement in the through orifice, and a body (21) of smaller thickness situated downstream from its head (in the direction for insertion into the through orifice).

3. An assembly according to claim 1 or claim 2, in which each edge (6, 8) of a piece has a side face (6a, 8a) for making contact with the other edge, the assembly being **characterized in that** at least one of the pieces is provided with wedges (23) cooperating with the corresponding contact side face to form a corner for receiving the edge of the other piece.

4. An assembly according to claim 3, **characterized in that** wedges (23) are arranged in a staggered configuration so as to avoid interfering with each other and they are offset towards the inside of the vehicle so as to pass behind the contact face (6a, 8a) of the other piece.

5. An assembly according to claim 4, **characterized in that** the staggered wedges (23) are dimensioned on the two pieces of bodywork in such a manner that two adjacent wedges, each belonging to respective one of the pieces, lie close to each other when the two pieces are assembled together.

6. An assembly according to any one of claims 3 to 5, **characterized in that** the wedges (23) are prismatic in shape, the small base lying at the end of the wedge, thereby facilitating the approach between the two pieces of bodywork by acting as positioning guides along said third direction.

7. An assembly according to any one of claims 1 to 6, **characterized in that** the cotter (12') is provided with a stub (30) making it easier to insert into the through orifice of the tongue (13) by providing a bearing surface, said stub preferably extending parallel to the tongue when the cotter is inserted in the through orifice.

8. An assembly according to any one of claims 1 to 7, **characterized in that** the two pieces of bodywork comprise firstly a bumper (1), and secondly a fender or a piece of fender trim (2).
